Europäisches Patentamt

European Patent Office

Office européen des brevets

(19)

(11) **EP 1 022 661 A1**

(12) **DEMANDE DE BREVET EUROPEEN**

(43) Date de publication:
**26.07.2000 Bulletin 2000/30**

(51) Int Cl.[7]: **G06F 17/14**

(21) Numéro de dépôt: **00400169.9**

(22) Date de dépôt: **21.01.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **25.01.1999 FR 9900770**

(71) Demandeur: **STMicroelectronics SA**
**94250 Gentilly Cedex (FR)**

(72) Inventeurs:
• **Cambonie, Joel**
  **38190 La Combe de Lancey (FR)**
• **Mazzoni, Simone**
  **38000 Grenoble (FR)**

(74) Mandataire: **Casalonga, Axel**
**BUREAU D.A. CASALONGA - JOSSE**
**Morassistrasse 8**
**80469 München (DE)**

(54) **Dispositif de calcul de la transformée de Fourier directe ou inverse du produit d'un symbole complexe par une forme d'onde sinusoîdale complexe**

(57) Le dispositif électronique comprend des moyens de traitement aptes à calculer la transformée de Fourier directe ou inverse du produit d'un symbole complexe d'entrée (A) de taille N par une forme d'onde sinusoïdale complexe de période n, à partir de traitements élémentaires du type papillon correspondant à plusieurs étages d'un graphe de calcul en forme générale de papillon. n est un entier inférieur à N, et les moyens de traitement comportent des premiers moyens de traitement élémentaires aptes à effectuer simultanément ledit produit et les calculs de transformée de Fourier relatifs au premier étage du graphe.

# FIG.2

## Description

L'invention concerne les dispositifs électroniques de calcul permettant de calculer la transformée de Fourier directe ou inverse du produit d'un symbole complexe d'entrée de taille N0 par une forme d'onde sinusoïdale complexe de période n, et leurs modes de fonctionnement.

L'invention s'applique avantageusement mais non limitativement aux dispositifs à architecture dite "série" ou "pipelinée".

Dans de nombreuses applications, notamment dans des applications terrestres de télévision numérique, utilisant pour la transmission un codage OFDM (Orthogonal frequency division multiplex : "multiplexage à répartition orthogonale de fréquence"), il s'avère nécessaire de multiplier le symbole d'entrée par une exponentielle complexe, avant d'effectuer la transformée de Fourier directe ou inverse, en particulier aux fins d'égalisation adaptative.

La solution actuellement utilisée consiste à effectuer le produit dans un multiplieur dont la sortie attaque le processeur dédié aux calculs de transformée de Fourier. Or, ceci conduit à un rajout de matériel et requiert un mécanisme d'arrondi supplémentaire. Afin de ne pas altérer la précision de calcul, il est nécessaire de prévoir des bits additionnels, c'est-à-dire d'augmenter la taille des chemins de donnée.

L'invention propose une solution plus satisfaisante à ce problème.

Un but de l'invention est d'effectuer le produit du symbole d'entrée par une exponentielle complexe en s'affranchissant de mécanisme d'arrondi supplémentaire autre que ceux existant déjà pour les traitements de transformée de Fourier, et par conséquent de bruit de calcul supplémentaire, tout en réduisant le matériel supplémentaire nécessaire pour effectuer ce produit.

De nombreuses implémentations de transformées de Fourier dédiées ou programmées sur des microprocesseurs de traitement du signal ont été exposées dans la littérature. La plupart de ces implémentations utilisent une variante de l'algorithme de Cooley-Tukey, bien connu de l'homme du métier, qui permet de réduire le nombre d'opérations arithmétiques nécessaires au calcul de la transformée de Fourier. Cet algorithme permet ainsi notamment de réduire le calcul d'une transformée de Fourier rapide de taille initiale $r^p$, où r représente le "radix" selon une dénomination habituellement utilisée par l'homme du métier, en celui de r transformées de Fourier de taille $r^{p-1}$ et d'additions et de multiplications complexes supplémentaires. En réitérant cette réduction, on arrive au calcul de transformées de Fourier de taille r, aisément réalisables, notamment si r est choisi égal à 2 ou 4.

L'algorithme de Cooley-Tukey utilise un graphe de calcul faisant apparaître une structure en forme générale de papillon, bien connue de l'homme du métier, et communément désignée en langue anglaise sous le terme "butterfly".

Plusieurs architectures matérielles sont alors possibles pour implémenter une structure de calcul en forme de papillon.

Une première solution consiste à réaliser un opérateur matériel capable d'effectuer un calcul de type papillon, par papillon du graphe. Cependant, une telle solution n'est envisageable que pour l'implémentation de transformées de Fourier de petite taille.

Une deuxième solution consiste à ne réaliser qu'un seul opérateur matériel du type papillon, et destiné à effectuer successivement les calculs correspondant à tous les papillons de tous les étages du graphe. Une telle solution nécessite d'une part un opérateur matériel très rapide, et d'autre part une mémoire d'entrée distincte de la mémoire servant à écrire les résultats intermédiaires de calcul et ce, afin d'éviter les conflits d'accès lorsqu'un bloc de données entre dans l'opérateur alors que le bloc précédent est encore en cours de traitement.

Une solution intermédiaire consiste à réaliser un opérateur matériel du type papillon par étage du graphe, ainsi qu'un élément de mémorisation, tel que par exemple des lignes à retard ou des registres à décalage, dont la fonction est de présenter en entrée de l'opérateur les données dans le bon ordre compte tenu des papillons du graphe de l'étage considéré.

De telles architectures sont dites "série" ou "pipelinées" selon une dénomination usuelle employée par l'homme du métier.

Plus précisément, un dispositif électronique de calcul d'une transformée de Fourier dite "à architecture pipelinée" comprend une pluralité d'étages de traitement successifs connectés en série entre l'entrée et la sortie du dispositif par des chemins de données internes. Ces étages comportent respectivement d'une part des moyens de traitement élémentaires aptes à effectuer des traitements de transformée de Fourier de tailles élémentaires plus faibles que la taille initiale, sur des blocs de données de tailles successivement réduites d'un étage au suivant et, d'autre part, des moyens de mémorisation élémentaires.

Par "taille initiale" de la transformée de Fourier on entend ici et dans la suite du texte la taille des blocs reçus en entrée du dispositif par le premier étage.

Les tailles élémentaires des transformées de Fourier effectuées par les différents étages peuvent être identiques et égales au radix de la transformée de Fourier. On parle alors de transformée de Fourier à radix "uniforme." Elles peuvent être différentes d'un étage à l'autre dans le cas de transformées de Fourier à radix "mixte".

L'invention s'applique à tout type d'architecture matérielle capable d'implémenter une structure de calcul en forme de papillon.

Plus précisément, l'invention propose un dispositif électronique, comprenant des moyens de traitement aptes à calculer la transformée de Fourier directe ou inverse du produit d'un symbole complexe d'entrée de taille N par une forme d'onde sinusoïdale complexe de période n, à partir de traitements élémentaires du type papillon correspondant à plusieurs étages d'un graphe de calcul en forme générale de papillon.

Selon une caractéristique générale de l'invention, n est un entier inférieur à N, et les moyens de traitement comportent des premiers moyens de traitement élémentaires aptes à effectuer simultanément ledit produit et les calculs de transformée de Fourier relatifs au premier étage du graphe.

En d'autres termes, l'invention propose de réaliser la multiplication complexe du symbole d'entrée par la forme d'onde sinusoïdale de période n, simultanément avec les traitements de type papillon relatifs au premier étage du graphe de calcul.

En pratique, si l'on utilise une architecture pipelinée, ladite multiplication complexe sera implémentée au sein du premier étage de traitement (étage d'entrée) du dispositif à architecture pipelinée. Les autres étages de traitement ne sont pas modifiés par rapport aux étages classiques de traitement de transformée de Fourier.

Selon un mode de réalisation de l'invention, qui s'applique à tout type d'architecture matérielle, qu'elle soit pipelinée ou non, les premiers moyens de traitement élémentaires comportent

- un module additionneur/soustracteur complexe du type papillon, modifié compte tenu du rang $z$ de la donnée au sein du symbole d'entrée et de la valeur de n modulo r, où r désigne le radix de la transformée de Fourier élémentaire associée au premier étage,
- une mémoire contenant N coefficients complexes respectivement égaux à $e^{2jq\pi/N}$, q étant un entier,
- des moyens d'élaboration aptes à déterminer l'entier q à partir du rang $z$ de la donnée d'entrée ($z$ variant de 0 à N-1), du secteur p dans lequel se situe la donnée d'entrée (p variant de 0 à r-1) et de n, et
- un multiplieur apte à effectuer les produits des coefficients successivement extraits de la mémoire, par les valeurs de sortie successivement délivrées par le module additionneur/soustracteur complexe.

Plus précisément, pour une transformée de Fourier directe, l'entier q est égal à (p-n)i modulo N, où i est égal à $z$ modulo N/r, et les moyens d'élaboration comportent avantageusement un premier multiplieur calculant le secteur p en effectuant le produit du rang $z$ de la donnée d'entrée par le rapport r/N.

D'autres avantages et caractéristiques de l'invention apparaîtront à l'examen de la description détaillée de modes de réalisation et de mises en oeuvre, nullement limitatifs, et des dessins annexés, sur lesquels :

- la figure 1 illustre un opérateur classique de transformée de Fourier en forme de papillon à radix 4;
- la figure 2 illustre un opérateur complexe du type papillon selon l'invention;
- la figure 3 illustre plus précisément le module additionneur/ soustracteur complexe de l'opérateur de la figure 2;
- la figure 4 est une implémentation matérielle selon l'invention, permettant d'adresser des coefficients complexes utilisables à la fois pour le calcul de transformée de Fourier et pour la multiplication complexe par la forme d'onde sinusoïdale de période n;
- la figure 5 est un synoptique schématique d'un dispositif selon l'invention à architecture pipelinée à deux étages de traitement;
- la figure 6 illustre les traitements de type papillon effectués selon l'invention dans ces étages;
- la figure 7 est une représentation schématique de l'architecture matérielle d'un étage de traitement du dispositif de la figure 1;
- la figure 8 illustre plus en détail certains des moyens illustrés sur la figure 7 et implémentés dans le premier étage de traitement;
- les figures 9a à 9d illustrent très schématiquement la configuration d'une mémoire d'un dispositif selon l'invention à architecure pipelinée et la mise en oeuvre de ce dispositif dans le cas d'un recadrage de données au sein d'un étage de traitement à radix 4 à architecture pipelinée;
- la figure 10 illustre un opérateur classique de transformée de Fourier en forme de papillon à radix 2; et
- la figure 11 illustre un opérateur de type papillon à radix 2 selon l'invention.

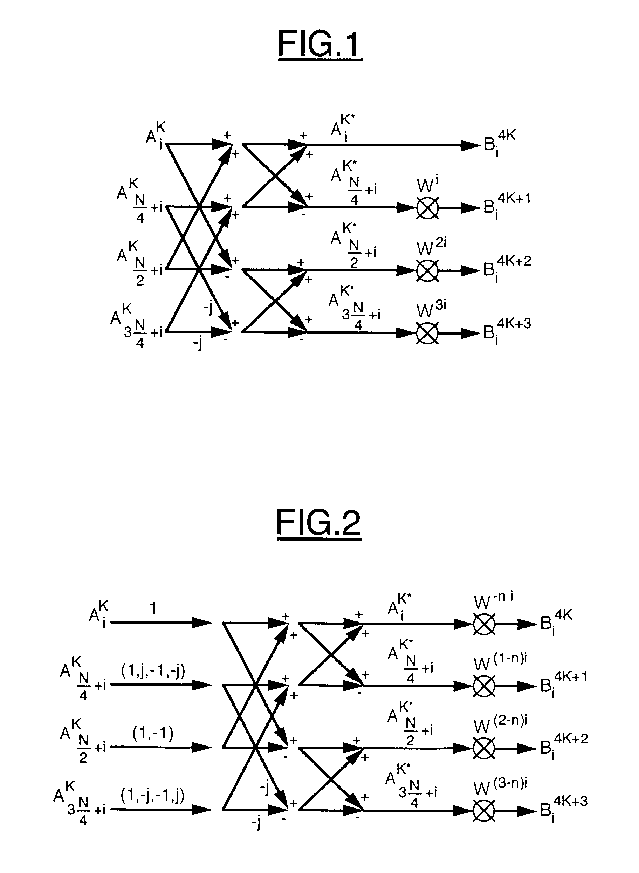

On fait maintenant référence plus particulièrement à la figure 1.

D'une façon générale, si pour un étage de traitement à radix 4, la taille du bloc de données reçu en entrée est égale à N, ce bloc de données peut être décomposé en quatre segments de N/4 données chacun, temporellement reçus consécutivement. Le premier segment est formé des données $A_i^K$, le deuxième segment est formé des données $A_{N/4+i}^K$, le troisième segment est formé des données $A_{N/2+i}^K$ et le quatrième segment est formé des données $A_{3N/4+i}^K$, i variant de 0 à N/4 - 1, et représentant le nombre de traitements du type papillon effectué dans l'étage sur chaque bloc de données reçu. K représente le $K^{ème}$ bloc reçu par l'étage. i est égal à $z$ module 4 où $z$ représente le rang de la donnée dans le bloc (ou symbole).

Par ailleurs, l'homme du métier sait que si s désigne le rang de l'étage considéré, N est égal à N0/4$^s$ où NO désigne la taille initiale de la transformée de Fourier, c'est-à-dire la taille de chaque symbole reçu par l'étage d'entrée.

En outre, si l'étage considéré est le premier, N est égal à NO et le Kème bloc correspond au Kème symbole reçu.

Par contre, si l'étage considéré n'est pas le premier (rang s différent de 0), chaque symbole en entrée du dispositif se décompose récursivement aus sein de chaque étage en 4$^s$ blocs K (K variant de 0 à 4$^s$-1).

Le résultat de ces traitements de type papillon sont des données intermédiaires également ordonnées au sein de quatre segments intermédiaires contenant chacun N/4 données intermédiaires.

Plus précisément, le premier segment intermédiaire contient les données intermédiaires $A_i^{K*}$, le deuxième segment intermédiaire contient les données intermédiaires $A_{N/4+i}^{K*}$, le troisième segment intermédiaire contient les données $A_{N/2+i}^{K*}$ et le quatrième segment intermédiaire contient les données $A_{3N/4+i}^{K*}$.

Ces données intermédiaires sont obtenues selon les formules (I) à (IV) suivantes :

$$A_i^{K*} = A_i^K + A_{N/4+i}^K + A_{N/2+i}^K + A_{3N/4+i}^K \qquad (I)$$

$$A_{N/4+i}^{K*} = A_i^K - A_{N/4+i}^K + A_{N/2+i}^K - A_{3N/4+i}^K \qquad (II)$$

$$A_{N/2+i}^{K*} = A_i^K - j A_{N/4+i}^K - A_{N/2+i}^K + j A_{3N/4+i}^K \qquad (III)$$

$$A_{3N/4+i}^{K*} = A_i^K + j A_{N/4+i}^K - A_{N/2+i}^K - j A_{3N/4+i}^K \qquad (IV).$$

Dans ces formules, j désigne le nombre complexe dont le carré est égal à -1, et i varie de 0 à N/4-1.

Ces données intermédiaires sont ensuite multipliées par des coefficients prédéterminés $W^0$ (c'est-à-dire 1), $W^1$, $W^{2i}$ et $W^{3i}$ selon les segments considérés. Ces coefficients sont des coefficients complexes classiques bien connus de l'homme du métier, donnés par la formule :

$$W^{pi} = e^{-2j\pi pi/N}$$

où p varie de 0 à 3 et i de 0 à N/4-1.

Après multiplication par ces coefficients W, on obtient, en sortie de l'étage de traitement, quatre blocs $BB^{4K}$, $BB^{4K+1}$, $BB^{4K+2}$, $B_i^{4K+3}$ contenant respectivement N/4 données de sortie, $B_i^{4K}$, $B_i^{4K+1}$, $B_i^{4K+2}$ et $B_i^{4K+3}$, avec i variant de 0 à N/4-1.

Tous les blocs BB seront alors traités consécutivement par les moyens de traitement élémentaires de l'étage suivant, chacun de ces blocs étant considéré comme un symbole d'entrée pour cet étage suivant.

La figure 2 illustre un opérateur complexe du type papillon à radix 4, selon l'invention, permettant de calculer FFT (exp(2j$\pi$ nz/N)$A_z$) dans laquelle FFT désigne l'opérateur transformée de Fourier directe, N est la taille du symbole d'entrée A (N = NO = 2048 par exemple), et dans laquelle n est un entier désignant la période de la forme d'onde sinusoïdale complexe destinée à être multipliée aux données $A_z$ (z variant de 0 à N-1) du symbole d'entrée.

Il a alors été observé selon l'invention que le module additionneur/soustracteur complexe du type papillon pouvait être modifié simplement par rapport à un module additionneur/soustracteur complexe du type papillon tel que celui illustré sur la figure 1, en affectant les données d'entrée $A_z$ de coefficients multiplicateurs f(n,z) tels que définis dans la table 1 ci-dessous.

Table 1

| f(n,z) | z=0 à N/4-1 | z=N/4 à N/2-1 | z=N/2 à 3N/4-1 | z=3N/4 à N-1 |
|---|---|---|---|---|
| n=0 mod 4 | 1 | 1 | 1 | 1 |
| n=1 mod 4 | 1 | j | -1 | -j |
| n=2 mod 4 | 1 | -1 | 1 | -1 |
| n=3 mod 4 | 1 | -j | -1 | j |

Ces opérations sont très simples et requièrent, notamment dans le cadre d'une architecture pipelinée, peu de matériel (hardware) supplémentaire.

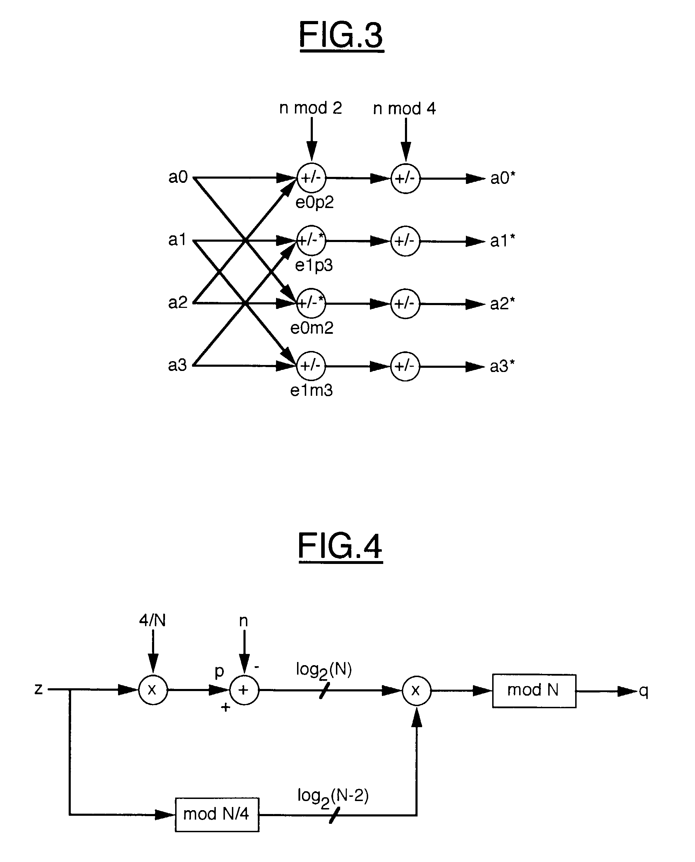

En pratique, ce module additionneur/soustracteur complexe selon l'invention peut se représenter comme illustré sur la figure 3, sur laquelle, pour des raisons de simplification, a0, a1, a2 et a3 désignent respectivement les données

$$A_i^K, \; A_{N/4+i}^K, \; A_{N/2+i}^K, \; A_{3N/4+i}^K,$$

avec i variant de 0 à N/4-1, et dans laquelle a0*, a1*, a2* et a3* désignent respectivement les données intermédiaires

$$A_i^{K*}, \; A_{N/4+i}^{K*}, \; A_{N/2+i}^{K*}, \; A_{3N/4+i}^{K*},$$

e0p2, e0m2, e1p3 et e1m3 sont des variables intermédiaires permettant de définir, soit l'addition simple a+b, soit l'opération complexe -j(a-b). Plus précisément,

si n modulo 2 est égal à 0, alors
e0p2 = a0+a2;
e0m2 = a0-a2;
e1p3 = a1+a3
e1m3 = -j(a1-a3);
sinon
e0p2 = a0-a2;
e0m2 = a0+a2;
e1p3 = -j(a1-a3);
e1m3 = a1+a3;

De même, si n modulo 4 est égal à 0 ou 1, alors

a0* = e0p2+e1p3;
a1* = e0p2-e1p3;
a0* = e0p2-e1p3;
a1* = e0p2+e1p3;

Si, par contre, n modulo 4 est égal à 2 ou 3, alors

a2* = e0m2-e1m3;
a3* = e0m2+e1m3;
a2* = e0m2+e1m3;
a3* = e0m2-e1m3.

Un tel module selon l'invention peut être aisément réalisé par synthèse automatique et le matériel (hardware) supplémentaire est alors estimé à 20% par rapport à un module additionneur/soustracteur complexe classique à radix 4 de type papillon.

Les données intermédiaires A* sont ensuite multipliées par des coefficients complexes, respectivement égaux à $e^{2jq\pi/N}$, q étant un entier. L'entier q est élaboré à partir du rang z de la donnée du symbole d'entrée, du secteur p dans lequel se situe la donnée d'entrée, p variant de 0 à r-1 (r désignant le radix de l'étage du graphe), et de n. Plus précisément, q est égal à (p-n)i modulo N, où i est égal à z modulo N/r, i variant en l'espèce de 0 à (N/r)-1.

Sur la figure 2, représentant un étage à radix 4, p varie de 0 à 3, et le terme modulo N n'est pas représenté.

Les N coefficients complexes, qui se décomposent en N coefficient réel (cosinus) et coefficient imaginaire (sinus), sont stockés dans une mémoire morte aux adresses q respectives. Une implémentation matérielle d'un calculateur d'adresse permettant de déterminer l'adresse q, c'est-à-dire le numéro d'angle dans la mémoire morte (q=0 correspondant à un angle nul) est illustré sur la figure 4.

Sur cette figure, on voit que le calculateur d'adresse comporte un premier multiplieur destiné à multiplier la donnée d'entrée de rang z par le nombre 4/N de façon à déterminer le secteur angulaire p. Un soustracteur permet ensuite de soustraire à p le nombre n, de façon à obtenir un nombre de $\log_2(N)$bits. Ce nombre est multiplié par i (égal à z modulo N/4 dans le cas où le radix est égal à 4). Un multiplieur $\log_2(N) \times \log_2(N-2)$ modulo N, permet ensuite de déterminer la valeur d'angle q.

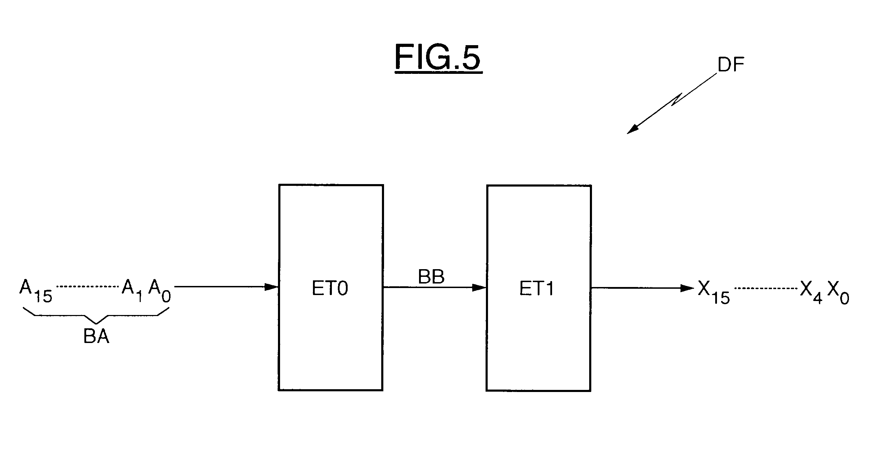

On va maintenant décrire, en se référant plus particulièrement aux figures 5 à 8d, un mode de réalisation d'un dispositif de calcul selon l'invention, à architecture pipelinée, et capable d'effectuer la transformée de Fourier d'un symbole d'entrée de taille égale à 16 par une forme d'onde sinusoïdale complexe de période n. Ce dispositif à architecture pipelinée comporte deux étages de traitement à radix 4, ET0 et ET1. Selon l'invention, seul l'étage ET0 effectue simultanément les calculs de transformée de Fourier relatifs à ce premier étage, et le produit par la forme d'onde sinusoïdale complexe. L'étage de traitement ET 1 n'effectue que des traitements de transformée de Fourier classiques, conformément à l'opérateur illustré sur la figure 1.

L'étage d'entrée ET0 reçoit des flots de symboles ou blocs de données BA, comportant respectivement seize données $A_0$-$A_{15}$. La sortie de l'étage ET0 délivre des blocs successifs BB de quatre données qui sont traitées dans l'étage ET 1. Cet étage ET 1 délivre le symbole de sortie $X_{15}$ ... $X_4 X_0$ correspondant à la transformation de Fourier directe du produit du symbole d'entrée BA par la forme d'onde sinusoïdale complexe de période n.

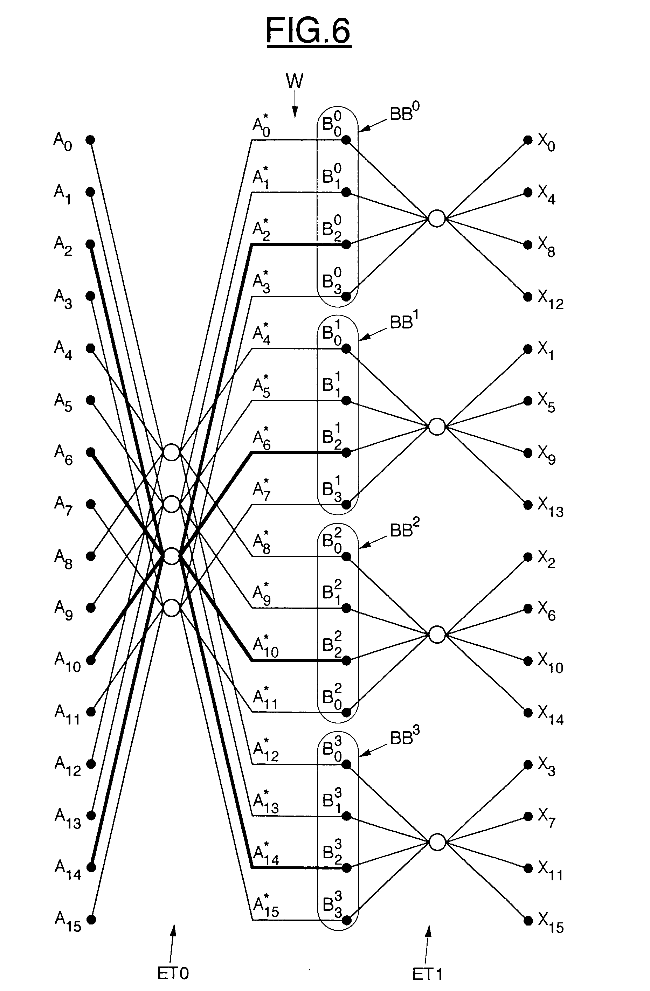

La figure 6 illustre le cas particulier des seize données (N=16) de chaque bloc reçu par l'étage ET0.

L'étage de traitement à radix 4 effectue alors N/4 traitements du type papillon conformes au graphe de la figure 2, sur N/4 groupes distincts de quatre données formés respectivement par une donnée du premier segment et les données homologues des trois autres segments.

Dans l'exemple particulier de la figure 6, l'étage ETO effectue un premier traitement de type papillon sur le groupe formé des données $A_0$, $A_4$, $A_8$ et $A_{12}$, un deuxième traitement du type papillon sur un deuxième groupe de données formé des données $A_1$, $A_5$, $A_9$ et $A_{13}$ et ainsi de suite jusqu'à un quatrième traitement de type papillon sur le quatrième groupe de données formé des données $A_3$, $A_7$, $A_{11}$ et $A_{15}$.

Les moyens de traitement élémentaires de l'étape ET1 vont successivement effectuer un traitement de type papillon conforme au graphe de la figure 1 sur les quatre données de chaque bloc d'entrée BB, de façon à obtenir des données intermédiaires B*, puis des données de sortie qui sont en fait, dans le cas présent, le résultat de la transformée de Fourier du produit de l'exponentielle complexe de période n par les données d'entrée A.

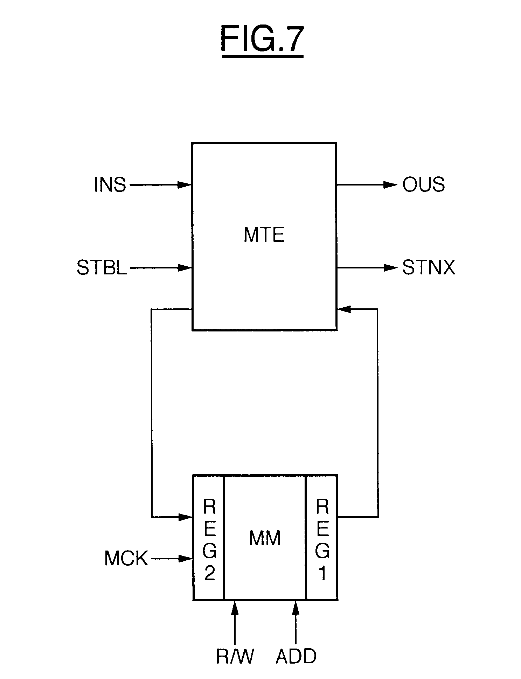

Sur la figure 7, la référence MTE désigne les moyens de traitement élémentaires d'un étage de traitement radix 4 du dispositif DF. Ces moyens MTE comportent une borne d'entrée recevant le flux INS des différents blocs de données provenant soit d'un moyen extérieur au dispositif si l'étage considéré est le premier (dans ce cas les différents blocs représentent les différents symboles sur lesquels va s'effectuer la transformée de Fourier du produit de chaque symbole par l'exponentielle complexe), soit de l'étage précédent. Les données contenues dans chacun des blocs reçus sont délivrées au rythme d'un premier signal d'horloge SMCK. Les moyens de traitement MTE sont, quant à eux, cadencés par un signal d'horloge de base MCK dont la fréquence est soit deux fois plus importante que la fréquence du signal SMCK, soit quatre fois plus importante selon que les moyens de traitement MTE reçoivent au cours de chaque cycle du signal SMCK soit la partie réelle et la partie imaginaire de chaque donnée, soit uniquement la partie réelle ou la partie imaginaire.

Le flot des données de sortie OUS est délivré à une borne de sortie de cet étage de traitement.

Par ailleurs, les moyens de traitement élémentaires MTE reçoivent un premier signal de contrôle STBL provenant soit de moyens extérieurs du dispositif si l'étage considéré est le premier, soit de l'étage précédent. Ce signal STBL indique, par exemple lors de son passage à l'état "1", la réception de la première donnée d'un bloc. De même, les moyens MTE délivrent à l'étage suivant un deuxième signal de contrôle STMX indiquant, par exemple lors de son passage à l'état "1", l'émission de la première donnée de sortie issue du traitement dudit bloc d'entrée. Le signal STBL reçu par l'étage courant est alors le signal STNX émis par l'étage précédent.

Outre ces moyens de traitement élémentaires, l'étage de traitement radix 4 comporte des moyens de mémorisation élémentaires composés ici d'une mémoire à accès aléatoire simple accès MM rebouclée sur les moyens de traitement élémentaires MTE par l'intermédiaire d'un premier registre ou bascule REG1 connecté sur la sortie de la mémoire MM, et par l'intermédiaire d'un deuxième registre ou bascule REG2 connecté sur l'entrée de la mémoire MM. La mémoire MM est commandée en écriture/lecture par un signal R/W. Lorsque ce signal vaut "1" par exemple, il s'agit d'une lecture et lorsqu'il vaut "0", il s'agit d'une écriture. Par ailleurs, la mémoire est adressée par un pointeur d'adresse ADD. A chaque cycle du signal d'horloge de base MCK, s'effectue soit un accès en écriture, soit un accès en lecture de la mémoire MM. De ce fait, à chaque cycle du premier signal d'horloge SMCK s'effectue un accès en lecture suivi d'un accès en écriture de la mémoire.

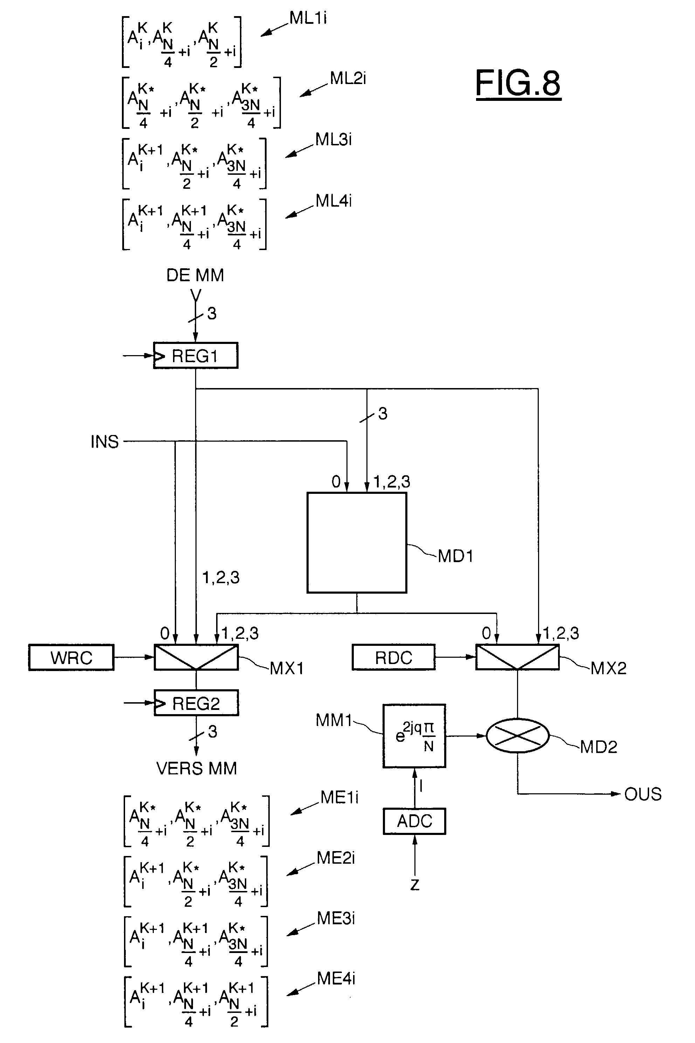

On suppose maintenant, en se référant plus particulièrement à la figure 8, que l'étage de traitement à radix 4 est le premier étage ET0 et qu'il est d'un premier type au sein duquel on n'effectue pas de calculs de dynamique des données.

Dans ce cas, la capacité de stockage des moyens de mémorisation élémentaires de l'étage de traitement est égale à 3N/4 données. Compte tenu de la présence des deux niveaux de pipeline, c'est-à-dire des deux registres REG1 et REG2, la capacité de stockage de la mémoire est égale à N/4-1 mots de trois données tandis que chaque registre REG1, REG2 est apte à stocker un mot de trois données. La mémoire MM peut donc se représenter comme une matrice de N/4-1 lignes et de 3 colonnes.

Les moyens de traitement élémentaires comportent un module additionneur/soustracteur complexe MD1 permettant de calculer les données intermédiaires selon les formules déduites des figures 2 et 3, ainsi qu'un module multiplicateur MD2 permettant de multiplier ces données intermédiaires par les coefficients appropriés W. La sortie du module multiplicateur délivre donc le flot de données de sortie OUS.

Les quatre sorties 0, 1, 2, 3 du module MD1 délivrent respectivement les données intermédiaires $A_i^{K*}$, $A_{N/4+i}^{K*}$, $A_{N/2+i}^{K*}$, $A_{3N/4+i}^{K*}$ des quatre segments intermédiaires.

La borne d'entrée de l'étage, recevant le flot INS des données d'entrée, ainsi que les trois sorties 1, 2, 3 du premier registre REG1 sont respectivement connectées sur les quatre entrées 0, 1, 2, 3 du module additionneur MD1.

La borne d'entrée de cet étage est par ailleurs reliée à l'entrée 0 d'un premier multiplexeur à quatre entrées MX1 dont les trois sorties sont reliées aux trois entrées du registre REG2.

Les trois autres entrées 1, 2 et 3 du premier multiplexeur MX 1 sont à la fois reliées aux trois sorties 1, 2, 3 du registre REG1 et aux trois sorties 1, 2 et 3 du module MD1.

La sortie 0 du module MD1 est reliée à l'entrée 0 d'un deuxième multiplexeur MX2 à quatre entrées dont la sortie est reliée à l'entrée du module multiplicateur MD2. Les trois autres entrées 1, 2 et 3 du deuxième multiplexeur sont reliées aux trois sorties du premier registre REGI.

Les données de chaque bloc d'entrée sont indexées par un premier compteur (compteur d'écriture) WRC modulo N et comptant de 0 à N-1 par exemple à la fréquence du premier signal d'horloge SMCK. De même, les données de sortie sont indexées de 0 à N-1 par un deuxième compteur modulo N, ou compteur de lecture RDC, comptant également par exemple de 0 à N-1 à la fréquence du premier signal d'horloge.

A cet égard, il convient de noter que la montée à 1 du premier signal de contrôle STBL, indiquant la réception de la première donnée du bloc, réinitialise le compteur WRC tandis que la montée à 1 du deuxième signal de contrôle STNX signalant l'émission de la première donnée de sortie, réinitialise le compteur de lecture RDC. L'homme du métier aura par ailleurs remarqué que, selon l'invention, le deuxième signal de contrôle STNX passe à l'état 1 lorsque le premier compteur WRC atteint la valeur 3N/4-1.

Le compteur d'écriture WRC commande le premier multiplexeur MX1.

Plus précisément, lorsque le compteur WRC compte de 0 à N/4-1, les trois entrées 1, 2, 3 du registre REG2 reçoivent respectivement la donnée disponible à l'entrée de l'étage, et les valeurs disponibles aux sorties 2 et 3 du registre REG1.

Lorsque le compteur WRC compte de N/4 à N/2-1, les trois entrées 1, 2, 3 du registre REG2 reçoivent respectivement la valeur disponible à la sortie 1 du registre REG1, la donnée disponible à l'entrée de l'étage de traitement et la valeur disponible à la sortie 3 du registre REG1.

Lorsque le compteur WRC compte de N/2 à 3N/4-1, les entrées 1, 2 et 3 du registre REG2 reçoivent respectivement la valeur délivrée à la sortie 1 du registre REG1, la valeur délivrée à la sortie 2 du registre REG1, et la donnée disponible à l'entrée de l'étage de traitement.

Enfin, lorsque le compteur WRC compte de 3N/4 à N-1, les trois entrées 1, 2 et 3 du registre REG2 reçoivent respectivement les valeurs délivrées par les sorties 1, 2 et 3 du module MD1.

Le registre REG2 stocke alors les trois données qui seront écrites au cycle d'horloge suivant dans la mémoire MM.

Le compteur RDC commande le multiplexeur MX2.

Plus précisément, lorsque le compteur RDC compte de 0 à N/4-1, le module multiplicateur MD2 recevra la valeur délivrée par la sortie 0 du module MD1.

Lorsque le compteur RDC compte de N/4 à N/2-1, le module MD2 recevra la valeur disponible à la sortie 1 du registre REG1.

Lorsque le compteur RDC compte de N/2 à 3N/4-1, le module MD2 recevra la valeur disponible à la sortie 2 du registre REG1.

Lorsque le compteur RDC compte de 3N/4 à N-1, le module MD2 recevra la valeur disponible à la sortie 3 du registre REG1.

Le signal d'adresse ADD de la mémoire MM est délivré par un compteur modulo N/4-1 (non représenté ici à des fins de simplification) et comptant par exemple de 0 à N/4-2 à la fréquence du premier signal d'horloge SMCK.

Les valeurs des sinus et des cosinus des coefficients complexes W, qui seront utilisés dans le module MD2, sont stockées dans la mémoire morte MM1 adressée par la sortie du calculateur d'adresse ADC tel que celui illustré sur la figure 4.

On va maintenant décrire plus en détail, toujours en se référant plus particulièrement à la figure 8 (et en supposant en outre à des fins de simplification, qu'aucun intervalle de garde ne sépare deux symboles consécutifs en entrée du dispositif de calcul) le remplissage de la mémoire MM ainsi que le mode de fonctionnement des moyens de traitement élémentaires de cet étage.

On suppose maintenant que la mémoire MM contient les données $A_i^K$, $A_{N/4+i}^K$, et $A_{N/2+i}^K$ des trois premiers segments du bloc K qui ont été stockés au fur et à mesure de leur réception, c'est-à-dire au fur et à mesure que le compteur WRC comptait de 0 à 3N/4-1. Ici et dans la suite du texte, i varie de 0 à N/4-1 au rythme du compteur WRC.

Lorsque le compteur WRC compte ensuite de 3N/4 à N-1, l'étage reçoit successivement en entrée les données $A_{3N/4+i}^K$ du quatrième segment du bloc. Cependant, ces données ne sont pas stockées dans la mémoire MM et sont utilisées avec les données homologues des trois premiers segments pour calculer les données intermédiaires $A_i^{K*}$, $A_{N/4+i}^{K*}$, $A_{N/2+i}^{K*}$ et $A_{3N/4+i}^{K*}$ des quatre segments intermédiaires.

Cependant, les données intermédiaires $A_i^{K*}$ du premier segment intermédiaire ne sont pas stockées dans la mémoire MM et sont directement transmises au module multiplicateur MD2.

Par contre, au fur et à mesure de la réception des données du quatrième segment du bloc K, les données mémorisées dans la mémoire MM et relatives aux trois premiers segments du bloc K sont respectivement remplacées par les données intermédiaires calculées par le module MD1 1 et relatives aux trois derniers segments intermédiaires.

En d'autres termes, si l'on se réfère à nouveau à la figure 8, lorsque le compteur compte de 3N/4 à N-1, les mots ML1i sont extraits de la mémoire tandis que les mots ME1i vont être mémorisés dans la mémoire via le registre REG2.

A l'étape suivante, c'est-à-dire lorsque le compteur WRC compte de 0 à N/4-1 correspondant à la réception des données du premier segment du bloc K+1, on extrait successivement de la mémoire les mots ML2i (i variant de 0 à N/4-1) correspondant aux mots précédents d'écriture MEli. On délivre au module multiplicateur MD2 les données intermédiaires du deuxième segment du bloc K et on restocke dans la mémoire MM des mots d'écriture ME2i contenant toujours les données intermédiaires des deux derniers segments du bloc K mais également les données du premier segment du bloc K+1 qui ont été substituées aux données intermédiaires du deuxième segment du bloc K.

Un fonctionnement analogue s'effectue lorsque le compteur compte de N/4 à N/2-1 avec les mots de lecture ML3 et ME3 (i variant toujours de 0 à N/4-1) puis avec les mots de lecture ML4 et ME4 lorsque le compteur compte de N/2 à 3N/4-1.

A l'issue de cette étape, la mémoire MM contient à nouveau les données des trois premiers segments du bloc K+1 et un nouveau cycle complet d'écriture/lecture peut recommencer.

La structure matérielle de l'étage de traitement ET1 diffère simplement de la structure de l'étage ET0 telle qu'illustrée sur la figure 8, par le fait que l'opérateur MD1 est conforme au graphe de la figure 1. En outre, la mémoire morte MM 1 contient également les valeurs des sinus et cosinus des coefficients complexes W classiques pour le calcul d'une transformée de Fourier. La mémoire MM1 peut alors être adressée directement par le compteur de lecture RDC.

L'homme du métier aura donc remarqué que l'invention permet d'effectuer simplement la transformée de Fourier directe du produit du symbole d'entrée par la forme d'onde sinusoïdale complexe en s'affranchissant du bruit de calcul généré par un multiplieur supplémentaire disposé avant l'étage d'entrée. En outre, le surplus de matériel est limité et les traitements élémentaires peuvent être effectués sans autre mécanisme d'arrondi que ceux déjà existants classiquement dans les étages de traitement implémentant des transformées de Fourier.

Lorsqu'il est nécessaire d'effectuer au sein d'un étage de traitement à radix 4 une évaluation de la dynamique des données afin d'effectuer un recadrage de ces dernières, la capacité de stockage de la mémoire MM est augmentée d'une colonne. De même, la capacité de stockage des registres REG1 et REG2 est augmentée d'une donnée.

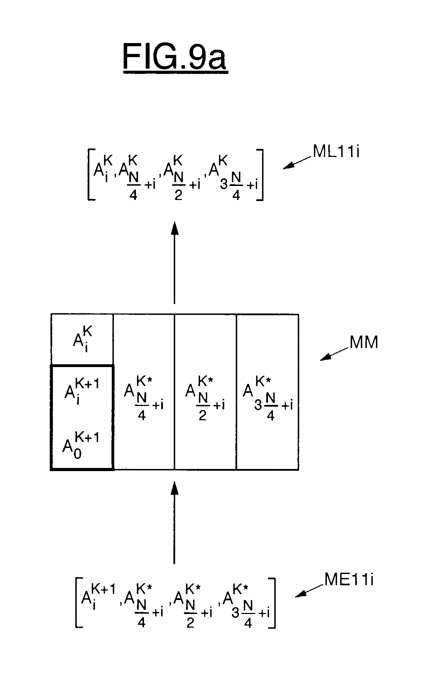

L'architecture matérielle d'un tel étage de traitement est alors analogue à celle illustrée sur la figure 8 (dans le cas où cet étage est le premier). Bien entendu, l'homme du métier saura aisément modifier les multiplexeurs ainsi que la commande associée et l'adressage de la matrice MM compte tenu du mode de fonctionnement et de remplissage de cette matrice qui vont maintenant être décrits plus en détail en se référant plus particulièrement aux figures 9a à 9d.

D'une façon générale, dans ce mode de réalisation, la mémoire MM stocke toutes les données des quatre segments d'un bloc courant K. On suppose que ceci a été réalisé juste avant l'étape illustrée sur la figure 9a.

Sur cette figure, au fur et à mesure de la réception des données du premier segment du bloc suivant K+1, les mots ML11i contenant les données des quatre segments du bloc K sont lus tandis que les mots ME11i contenant les données du premier segment du bloc suivant K+1 ainsi que les données intermédiaires des trois derniers segments intermédiaires du bloc K sont stockés dans la mémoire MM. (Il convient de noter ici que la lecture des données des quatre segments du bloc K a permis d'effectuer un recadrage de ces données (d'une façon connue en soi), par exemple par division par la valeur maximale, les données intermédiaires ayant ensuite été calculées sur ces données recadrées. A des fins de simplification, on n'a pas représenté ces moyens de calcul de dynamique et de recadrage). Plus précisément, les données du premier segment du bloc suivant K+1 se substituent dans la première colonne aux données du premier segment du bloc K tandis que les données intermédiaires des trois derniers segments intermédiaires du bloc K se substituent dans les trois autres colonnes de la matrice, aux données des trois derniers segments du bloc K.

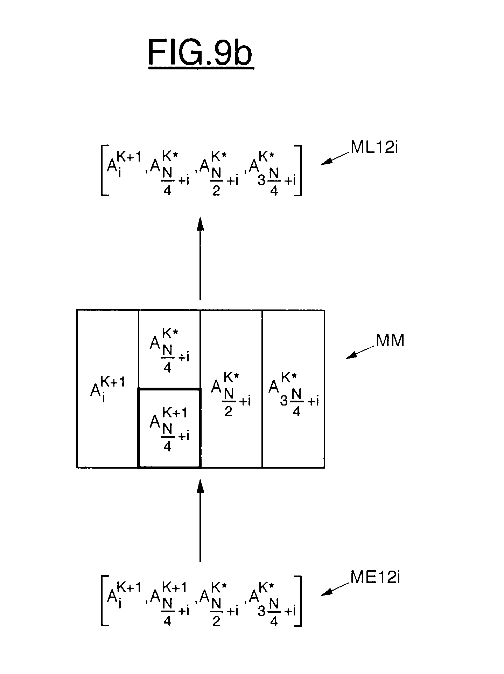

A l'étape suivante (fig. 9b), c'est-à-dire lorsque le compteur compte de N/4 à N/2-1, les mots ML12i sont extraits de la mémoire et les données du deuxième segment du bloc suivant K+1 se substituent aux données intermédiaires du deuxième segment du bloc K, les autres données intermédiaires étant réécrites dans la mémoire MM (mots d'écriture ME12i).

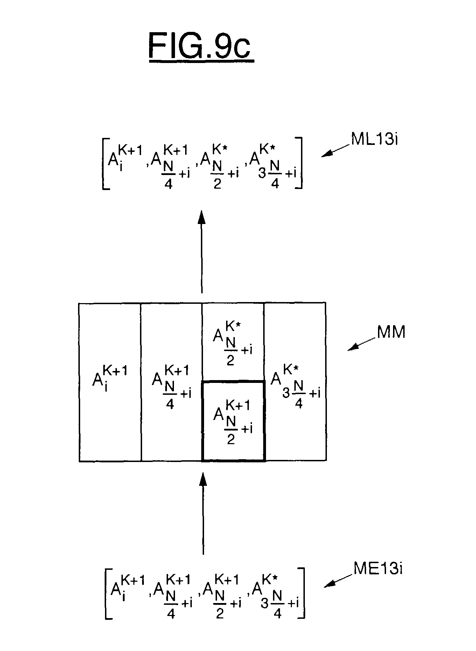

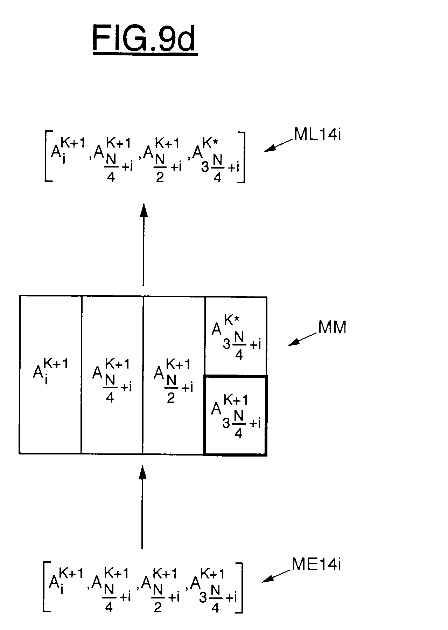

On répète ainsi l'opération pour les troisième et quatrième segments du bloc K+1 (figure 9c, figure 9d) avec les mots ML13i, ME13i et ML14i et ME14i.

A l'issue de l'étape représentée sur la figure 7d, la mémoire contient toutes les données du bloc suivant K+1 1 permettant un nouveau calcul sur des données recadrées.

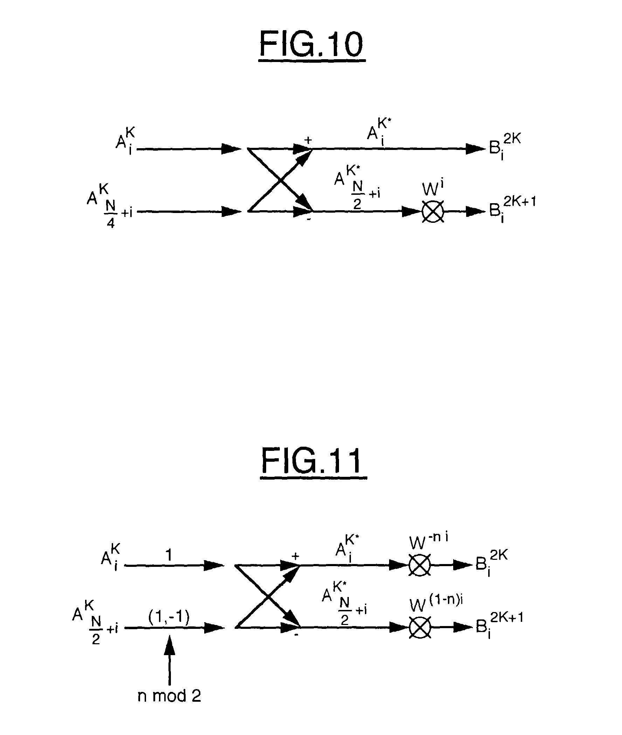

Bien entendu, tout ce qui vient d'être décrit pour des transformées de Fourier élémentaires à radix 4, peut s'appliquer à des transformées de Fourier élémentaires à radix r différent de 4, en particulier à radix 2. Plus précisément, dans ce cas, alors que la figure 10 illustre l'opérateur de type papillon à radix 2 utilisé classiquement pour des calculs de transformées de Fourier, la figure 11 illustre un opérateur à radix 2 modifié selon l'invention, de façon à permettre la multiplication du symbole d'entrée A par la forme d'onde sinusoïdale complexe de période n.

Comme on le voit sur la figure 11, et d'une façon analogue à ce qui a été décrit en référence à la table 1, la modification du module additionneur/soustracteur complexe de l'opérateur revient à multiplier le symbole A par le coefficient multiplicateur f(n,z) conformément à la table 2 ci-après :

Table 2

| f(n,z) | z=0 à N/2-1 | z=N/2 à N-1 |
|---|---|---|
| n=0 mod 2 | 1 | 1 |
| n=1 mod 2 | 1 | -1 |

Les coefficients complexes sont égaux à $e^{2jq\pi/N}$, où q est égal à (p-n)i modulo N, avec i égal à z modulo N/2 et variant de 0 à N/2-1, et p valant 0 ou 1.

Enfin, tout ce qui a été décrit préalablement pour des traitements de transformées de Fourier directe s'applique également à des traitements de transformées de Fourier inverse en remplaçant la valeur n par -n modulo N.

**Revendications**

1. Dispositif électronique, comprenant des moyens de traitement aptes à calculer la transformée de Fourier directe ou inverse du produit d'un symbole complexe d'entrée de taille N par une forme d'onde sinusoïdale complexe de période n, à partir de traitements élémentaires du type papillon correspondant à plusieurs étages d'un graphe de calcul en forme générale de papillon, caractérisé par le fait que n est un entier inférieur à N, et par le fait que les moyens de traitement comportent des premiers moyens de traitement élémentaires (MTE) aptes à effectuer simultanément ledit produit et les calculs de transformée de Fourier relatifs au premier étage (ET0) du graphe.

2. Dispositif selon la revendication 1, caractérisé par le fait que les premiers moyens de traitement élémentaires comportent un module additionneur/soustracteur complexe (MD1) du type papillon modifié compte tenu du rang z de la donnée au sein du symbole d'entré (A) et de la valeur de n modulo r, où r désigne le radix de la transformée de Fourier élémentaire associée au premier étage (ET0), une mémoire (MM1) contenant N coefficients complexes respectivement égaux à $e^{2jq\pi/N}$, q étant un entier, des moyens d'élaboration (ADC) aptes à élaborer l'entier q à partir du rang z de la donnée d'entrée, du secteur p dans lequel se situe la donnée d'entrée, p variant de 0 à r-1, et de n, ainsi qu'un multiplieur (MD2) apte à effectuer les produits des coefficients successivement extraits de la mémoire (MM1) par des valeurs de sortie successivement délivrées par le module additionneur/soustracteur complexe (MD1).

3. Dispositif selon la revendication 2, caractérisé par le fait que, la transformée de Fourier étant directe, l'entier q est égal à (p-n)i modulo N, où i est égal à z modulo N/r, et les moyens d'élaboration (ADC) comportent avantageusement un premier multiplieur calculant le secteur p en effectuant le produit du rang z de la donnée d'entrée par le rapport r/N.

4. Dispositif selon la revendication 2 ou 3, caractérisé par le fait que le radix r est égal à 2 ou 4.

5. Dispositif selon l'une des revendications précédentes, caractérisé par le fait qu'il est à architecture pipelinée, et par le fait que les premiers moyens de traitement élémentaires sont incorporés dans le premier étage (ETO) du dispositif.

# FIG.1

# FIG.2

## FIG.3

## FIG.4

## FIG.5

# FIG.6

# FIG.7

INS → MTE → OUS

STBL → MTE → STNX

MCK → REG 2 | MM | REG 1

R/W  ADD

## FIG.8

$$\left[A_i^K, A_{\frac{N}{4}+i}^K, A_{\frac{N}{2}+i}^K\right] \quad \longleftarrow ML1i$$

$$\left[A_{\frac{N}{4}+i}^{K*}, A_{\frac{N}{2}+i}^{K*}, A_{\frac{3N}{4}+i}^{K*}\right] \quad \longleftarrow ML2i$$

$$\left[A_i^{K+1}, A_{\frac{N}{2}+i}^{K*}, A_{\frac{3N}{4}+i}^{K*}\right] \quad \longleftarrow ML3i$$

$$\left[A_i^{K+1}, A_{\frac{N}{4}+i}^{K+1}, A_{\frac{3N}{4}+i}^{K*}\right] \quad \longleftarrow ML4i$$

DE MM

REG1

INS

MD1

WRC — MX1

REG2

VERS MM

RDC — MX2

$MM1$ — $e^{2jq\frac{\pi}{N}}$ — MD2

ADC

OUS

Z

$$\left[A_{\frac{N}{4}+i}^{K*}, A_{\frac{N}{2}+i}^{K*}, A_{\frac{3N}{4}+i}^{K*}\right] \quad \longleftarrow ME1i$$

$$\left[A_i^{K+1}, A_{\frac{N}{2}+i}^{K*}, A_{\frac{3N}{4}+i}^{K*}\right] \quad \longleftarrow ME2i$$

$$\left[A_i^{K+1}, A_{\frac{N}{4}+i}^{K+1}, A_{\frac{3N}{4}+i}^{K*}\right] \quad \longleftarrow ME3i$$

$$\left[A_i^{K+1}, A_{\frac{N}{4}+i}^{K+1}, A_{\frac{N}{2}+i}^{K+1}\right] \quad \longleftarrow ME4i$$

# FIG.9a

$$\left[ A_i^K, A_{\frac{N}{4}+i}^K, A_{\frac{N}{2}+i}^K, A_{3\frac{N}{4}+i}^K \right] \quad \longleftarrow \text{ML11i}$$

| $A_i^K$ | | | |
|---|---|---|---|
| $A_i^{K+1}$ | $A_{\frac{N}{4}+i}^{K\star}$ | $A_{\frac{N}{2}+i}^{K\star}$ | $A_{3\frac{N}{4}+i}^{K\star}$ |
| $A_0^{K+1}$ | | | |

$\longleftarrow$ MM

$$\left[ A_i^{K+1}, A_{\frac{N}{4}+i}^{K\star}, A_{\frac{N}{2}+i}^{K\star}, A_{3\frac{N}{4}+i}^{K\star} \right] \quad \longleftarrow \text{ME11i}$$

# FIG.9b

$$\left[A_i^{K+1}, A_{\frac{N}{4}+i}^{K\star}, A_{\frac{N}{2}+i}^{K\star}, A_{3\frac{N}{4}+i}^{K\star}\right] \longleftarrow ML12i$$

$$A_i^{K+1} \quad A_{\frac{N}{4}+i}^{K\star} \quad A_{\frac{N}{4}+i}^{K+1} \quad A_{\frac{N}{2}+i}^{K\star} \quad A_{3\frac{N}{4}+i}^{K\star} \longleftarrow MM$$

$$\left[A_i^{K+1}, A_{\frac{N}{4}+i}^{K+1}, A_{\frac{N}{2}+i}^{K\star}, A_{3\frac{N}{4}+i}^{K\star}\right] \longleftarrow ME12i$$

# FIG.9c

$$\left[ A_i^{K+1}, A_{\frac{N}{4}+i}^{K+1}, A_{\frac{N}{2}+i}^{K\star}, A_{3\frac{N}{4}+i}^{K\star} \right]$$

← ML13i

$A_i^{K+1}$ $A_{\frac{N}{4}+i}^{K+1}$ $A_{\frac{N}{2}+i}^{K\star}$ $A_{\frac{N}{2}+i}^{K+1}$ $A_{3\frac{N}{4}+i}^{K\star}$

← MM

$$\left[ A_i^{K+1}, A_{\frac{N}{4}+i}^{K+1}, A_{\frac{N}{2}+i}^{K+1}, A_{3\frac{N}{4}+i}^{K\star} \right]$$

← ME13i

# FIG.9d

$$\left[ A_i^{K+1}, A_{\frac{N}{4}+i}^{K+1}, A_{\frac{N}{2}+i}^{K+1}, A_{3\frac{N}{4}+i}^{K\star} \right] \quad \longleftarrow \text{ML14i}$$

$$\left[ A_i^{K+1}, A_{\frac{N}{4}+i}^{K+1}, A_{\frac{N}{2}+i}^{K+1}, A_{3\frac{N}{4}+i}^{K+1} \right] \quad \longleftarrow \text{ME14i}$$

# FIG.10

$A_i^K \longrightarrow$ $+$ $\qquad A_i^{K^*} \qquad \longrightarrow B_i^{2K}$

$A_{\frac{N}{4}+i}^K \longrightarrow$ $-$ $\qquad A_{\frac{N}{2}+i}^{K^*} \qquad \bigotimes W^i \longrightarrow B_i^{2K+1}$

# FIG.11

$A_i^K \xrightarrow{\quad 1 \quad}$ $+$ $\qquad A_i^{K^*} \qquad \bigotimes W^{-ni} \longrightarrow B_i^{2K}$

$A_{\frac{N}{2}+i}^K \xrightarrow{\quad (1,-1) \quad}$ $-$ $\qquad A_{\frac{N}{2}+i}^{K^*} \qquad \bigotimes W^{(1-n)i} \longrightarrow B_i^{2K+1}$

n mod 2

20

Office européen
des brevets

**RAPPORT DE RECHERCHE EUROPEENNE**

Numéro de la demande

EP 00 40 0169

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FLIEGE: "Orthogonal Multiple Carrier Data Transmission" EUROPEAN TRANSACTIONS ON TELECOMMUNICATIONS AND RELATED TECHNOLOGIES, vol. 3, no. 3, mai 1992 (1992-05) - juin 1992 (1992-06), pages 255-264, XP000304924 Milano, IT * le document en entier * --- | 1-5 | G06F17/14 |
| A | SHOUSHENG HE ET AL: "Designing pipeline FFT processor for ODFM (de)modulation" 1998 URSI INTERNATIONAL SYMPOSIUM ON SIGNALS, SYSTEMS AND ELECTRONICS - CONFERENCE PROCEEDINGS, 29 septembre 1998 (1998-09-29) - 2 octobre 1998 (1998-10-02), pages 257-262, XP002120095 Pisa, IT * le document en entier * ----- | 1-5 | |

| | | | DOMAINES TECHNIQUES RECHERCHES (Int.Cl.7) |
|---|---|---|---|
| | | | G06F |

Le présent rapport a été établi pour toutes les revendications

| Lieu de la recherche | Date d'achèvement de la recherche | Examinateur |
|---|---|---|
| BERLIN | 11 mai 2000 | Abram, R |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

...........................................................................
& : membre de la même famille, document correspondant

EPO FORM 1503 03.82 (P04C02)